# EUROPEAN PATENT SPECIFICATION

(11) **EP 4 069 576 B1**
(45) Date of publication and mention of the grant of the patent: **05.08.2026**
(21) Application number: 21702845.5
(22) Date of filing: 06.01.2021
(51) Int. Cl.: B62D 15/02, G08G 1/14, G08G 1/16, G06V 20/58

(54) **SYSTEM AND METHOD FOR AUTOMATED PARKING OF A VEHICLE**
SYSTEM UND VERFAHREN ZUM AUTOMATISCHEN EINPARKEN EINES FAHRZEUGS
SYSTÈME ET PROCÉDÉ PERMETTANT LE STATIONNEMENT AUTOMATIQUE D'UN VÉHICULE

(30) Priority: 06.01.2020 US 202062957567 P
(43) Date of publication of application: 12.10.2022
(73) Proprietor: AUMOVIO Autonomous Mobility US, LLC, Auburn Hills, Michigan 48326 (US)
(72) Inventor: BURTCH, Joseph, Auburn Hills, Michigan 48326 (US); AHAMED, Nizar, Auburn Hills, Michigan 48326 (US); CRITCHLEY, James, Hockridge, Auburn Hills, Michigan 48326 (US); DAVANI, Sina, Auburn Hills, Michigan 48326 (US); PATHALIL, Nithin Joseph, Auburn Hills, Michigan 48326 (US)
(74) Representative: Isarpatent
(86) International application number: PCT/US2021/070004
(87) International publication number: WO 2021/142483

(56) References cited:
- WO-A1-2019/182621
- DE-A1- 102013 015 348
- JP-B2- 5 007 262

## Description

### CROSS REFERENCE TO RELATED APPLICATION

This application claims priority to U.S. provisional patent application No. 62/957,567, filed January 6, 2020.

### TECHNICAL FIELD

The technical field relates generally to autonomous or semi-autonomous vehicles.
From DE 10 2013 015 348 A1 is known a method for driving a vehicle into a parking space in a parking zone. When a vehicle approaches a parking space in a parking zone, it is identified whether this is a home parking space or a home parking zone. If the home parking space is identified, environmental data or driving data are stored or updated, which are recorded when approaching the home parking space. In a learning mode based on environment data or driving data several trajectories for the home parking space are determined, which are correlated to a map of the parking zone, and stored. In an operating mode, when approaching the home parking space, possible drivable trajectories are output for selection and activation by the operator of the vehicle in order to autonomously move the vehicle to the home parking space. DE 10 2013 015348 A1 reveals in particular a method of parking a vehicle comprising: creating a map of a parking environment utilizing data from at least one sensor coupled to a vehicle; storing the map in a data storage device; receiving a first learn signal indicating that the vehicle is located in a first parking position; determining a first set of spatial data indicative of the location of the vehicle relative to the map in response to receiving the first learn signal; storing the first set of spatial data in the data storage device; receiving a park signal indicating that an operator of the vehicle would like the vehicle to autonomously move to the first parking position; issuing commands to autonomously move the vehicle to the first parking position in response to receiving the park signal;
From WO 2019/182621 A1 is known a method of neural network-based vehicular parking control. The vehicle system can receive sensor data sensed by sensors mounted on a vehicle located at a parking zone. A digital map data structure is generated based on the data sensed by the sensors. A first path is generated which is based on the digital 3D dynamic map. Then, the system can receive vehicle dynamics information from a data file stored in memory of the vehicle. A second path is generated to park the vehicle based on the first path, vehicle dynamics information and at least one historical path stored in vehicle memory. At the end, commands are provided to control the vehicle to follow the second path to park the vehicle in the parking lot.

### BRIEF SUMMARY

A method of parking a vehicle includes creating a map of a parking environment utilizing data from at least one sensor coupled to a vehicle. The method further includes storing the map in a data storage device. The method also includes receiving a first learn signal indicating that the vehicle is located in a first parking position. The method further includes determining a first set of spatial data indicative of the location of the vehicle relative to the map in response to receiving the first learn signal. The method also includes storing the first set of spatial data in the data storage device. The method further includes receiving a park signal indicating that an operator of the vehicle would like the vehicle to autonomously move to the first parking position and issuing commands to autonomously move the vehicle to the first parking position in response to receiving the park signal. The method further includes receiving or determining a second set of spatial data indicative of a pick-up position of the vehicle relative to the map, the pick-up position being a location where the driver expects to join the vehicle. The method further includes storing the second set of spatial data in the data storage device. The method further includes receiving a retrieve signal indicating that an operator of the vehicle would like to retrieve the vehicle at the pick-up position. The method further includes issuing commands to autonomously move the vehicle to the pick-up position in response to receiving the retrieve signal, wherein the first learn signal indicates the vehicle is located in a forward-facing direction in the first parking position. The method further includes receiving a driver request for parking the vehicle in a rearward-facing direction in the first parking position.

### BRIEF DESCRIPTION OF THE DRAWINGS

Other advantages of the disclosed subject matter will be readily appreciated, as the same becomes better understood by reference to the following detailed description when considered in connection with the accompanying drawings wherein:
Figure 1 is a top view of a vehicle implemented with a vehicle parking system according to one exemplary embodiment;
Figure 2 is a flowchart of a method of parking a vehicle according to one exemplary embodiment; and
Figures 3-11 are images showing various steps of the method of parking the vehicle according to one or more exemplary embodiments.

### DETAILED DESCRIPTION

Referring to the Figures, wherein like numerals indicate like parts throughout the several views, a vehicle parking system 100 and method 200 of parking a vehicle is shown and described herein.

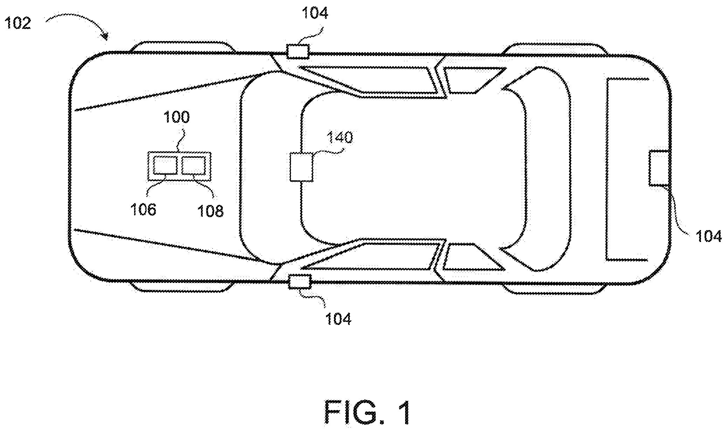

Referring to FIG. 1, a vehicle 102 may be equipped with the vehicle parking system 100. While the vehicle 102 in FIG. 1 represents an automobile having four wheels for travelling on land, it should be appreciated that the system 100 may be incorporated with other types of vehicles 102, including, but certainly not limited to, trucks, motorcycles, aircraft, watercraft (i.e., boats), agricultural implements, and military equipment.

The system 100 includes at least one sensor 104 for sensing an environment around at least a portion of the vehicle 102. The at least one sensor 104 may be implemented with a radar, lidar, camera, sonar, and/or other similar device. It should be appreciated that the system 100 may include multiple sensors 104. It should also be appreciated that the system may include multiple types of sensors 104.

The system 100 also includes a processor 106. The processor 106 is a device capable of performing calculations and/or performing a series of instructions (i.e., running a program). The processor 106 may be implemented with a microprocessor, microcontroller, applicant-specific integrated circuit ("ASIC"), a programmable logic device, a field-programmable gate array ("FPGA"), and/or other suitable device. It should be appreciated that the processor 106 described herein may be implemented with a single unit or multiple units. The processor 106 is in communication with the at least one sensor 104, such that, at least, data and/or information from the at least one sensor 104 may be received by the processor 106.

The system 100 also includes a data storage device 108 in communication with the processor 106. The data storage device 108 may be integrated with the processor 106, or may be a separate device, as is appreciated by those of ordinary skill in the art.

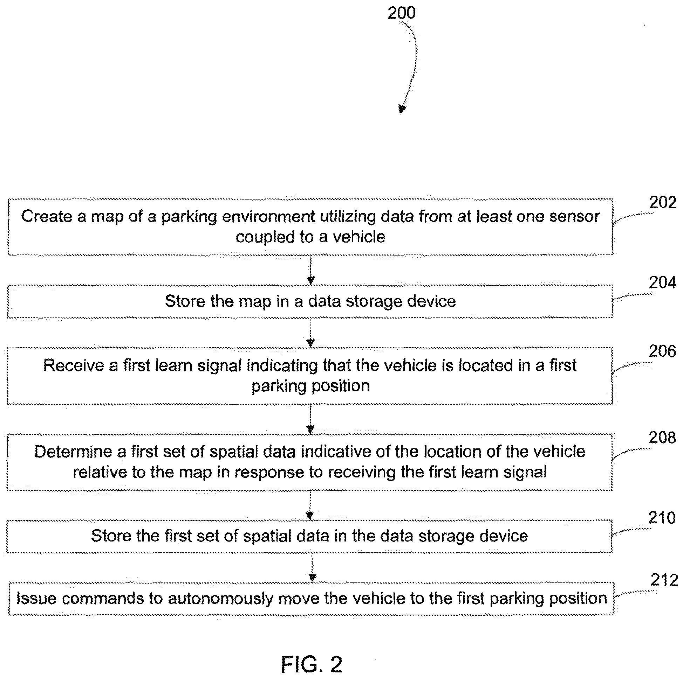

A method 200 of parking a vehicle 102 is shown in FIG. 2. The method 200 may be implemented using the system 100 or with other suitable devices.

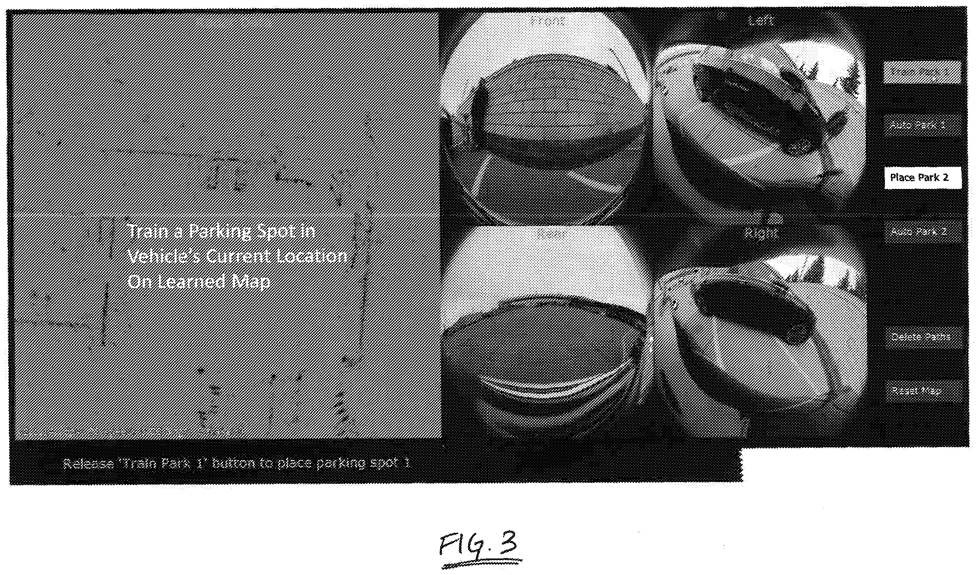

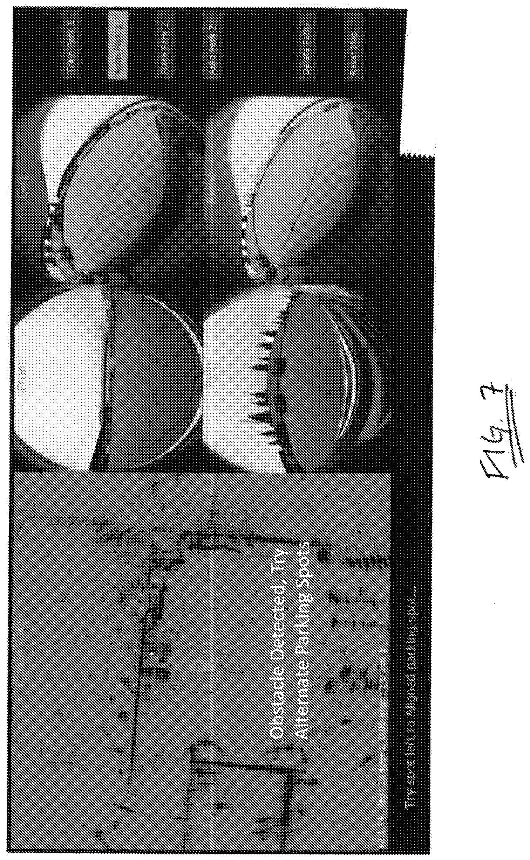

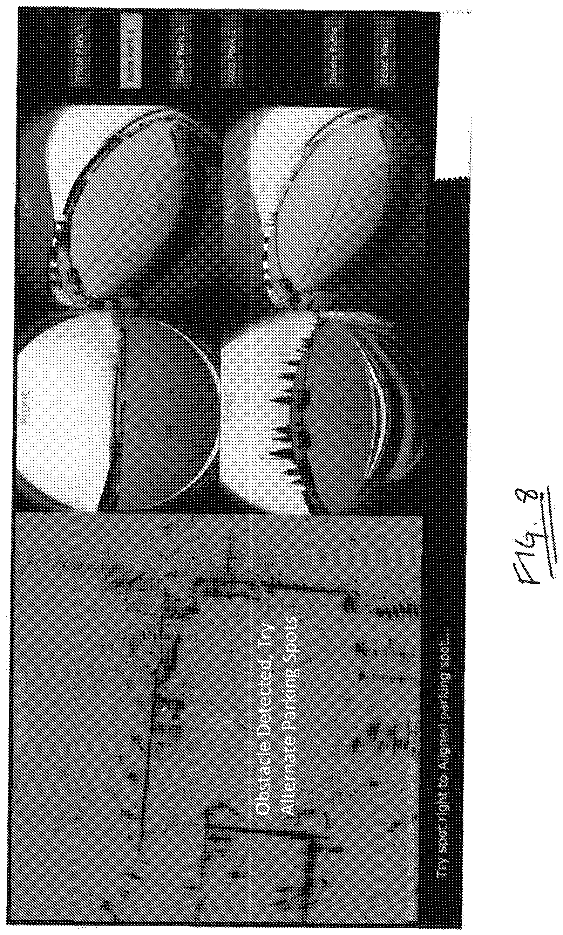

The method 200 includes, at 202, creating a map 300 of a parking environment 302 utilizing data from at least one sensor 104 coupled to the vehicle 102. In FIGS. 3-13, the map 300 is generated from data from radar units implemented as the at least one sensor 104. The map 300 indicates potential obstacles to the vehicle 102. For example, the potential obstacles may be a wall, fence, curb, pillar, other vehicle, vegetation, dock, pole, berm, sign post, construction marker, traffic cone, large toy, etc. The method 200 also includes, at 204, storing the map in the data storage device 108.

The method 200 includes, at 206, receiving a first learn signal indicating that the vehicle is located in a first parking position. For example, and as shown in FIG. 3, a driver may maneuver the vehicle 102 to a preferred parking location, e.g., in a home garage, carport, or parking space. The driver may then indicate that the vehicle 102 is in the preferred parking location, e.g., by pressing a button, activating a switch, or giving a voice command to a human-machine interface (not shown). A first learn signal is then generated and sent to the processor 106.

The method 200 may further include, at 208, determining a first set of spatial data indicative of the location of the vehicle 102 relative to the map in response to receiving the first learn signal. Said another way, when the first learn signal is received by the processor 106, the processor 106 then records data reflecting the position of the vehicle 102 relative to structures and/or obstacles as sensed by the at least one sensor 104 and recorded on the map. The method 200 may further include, at 210, storing the first set of spatial data in the data storage device 108.

The method 200 also includes, at 210, receiving a park signal indicating that an operator of the vehicle 102 would like the vehicle 102 to autonomously move to the first parking position. For example, in practice, once a preferred parking location is recorded, the operator of the vehicle 102 may indicate a desire for the vehicle 102 to autonomously move to said location. The operator may indicate such a desire, again, by pressing a button or by using a voice command.

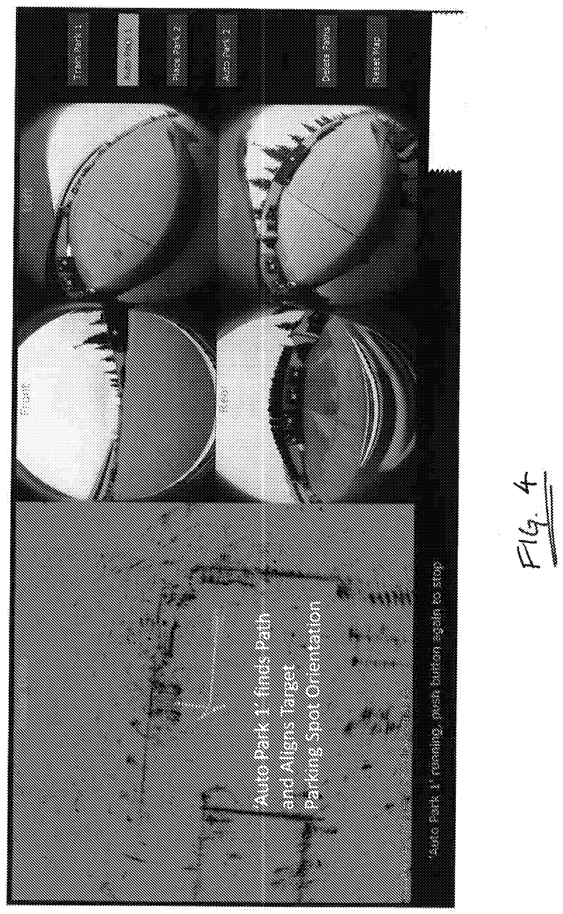

The method 200 may also include, at 212, issuing commands to autonomously move the vehicle 102 to the first parking position in response to receiving the park signal. That is, commands and/or signals are issued to the vehicle, specifically to a vehicle control system (not shown), to move to the first parking position, as shown in the example of Figure 4, in response to the received signal from the operator. The vehicle 102, utilizing the autonomous driving system, aligns its orientation to the orientation of the first parking position.

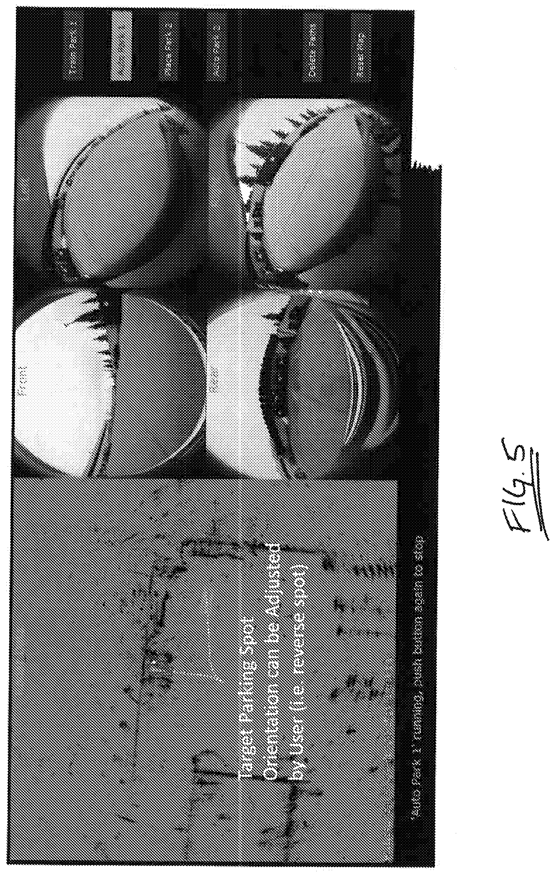

Referring now to Figure 5, the orientation of the vehicle 102 in the first parking position may be changed. This change may be requested by the driver of the vehicle 102. For example, even though the vehicle 102 may have been parked in the first parking position a forward-facing direction (e.g., in step 206), it may be desired to have the vehicle 102 be autonomously parked in the first parking position in a rearward-facing direction.

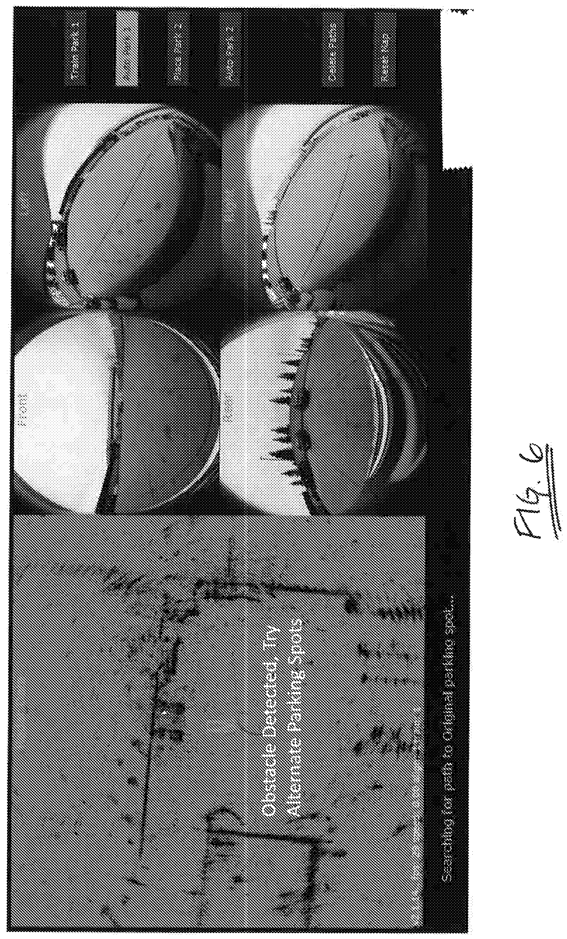

If obstacles are detected in or around the first parking position, the system 100 and method 200 may compensate for such obstacles. In one situation, if the obstacle is not in the first parking position, a route around the obstacles may be planned to avoid contact with the obstacle. In another situation, an alternative parking position may be utilized, as is shown in Figures 6-8. In yet another situation, the system 100 and method 200 may alert the driver of the obstacle.

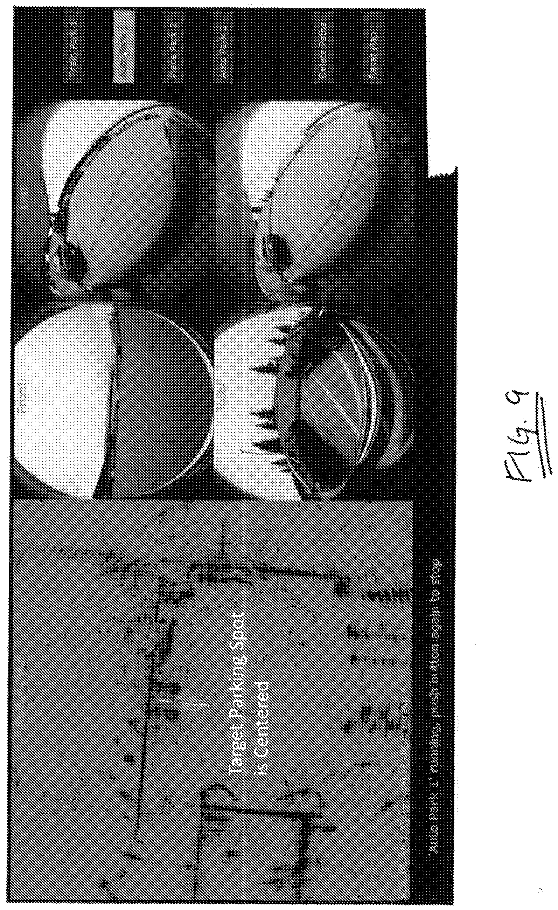

The method 200 may also include adjusting the first parking position during the autonomous movement of the vehicle into the first parking position based on data from the sensors 104 of the vehicle 102. In one exemplary embodiment, the first parking position is adjusted such that the vehicle 102 will be centered (see Figure 9) in the space available, e.g., the space between obstacles or between lines indicated a parking space.

A second parking position may be stored in the data storage device 108. The second parking position may be considered a "pick-up" position, i.e., the location where the driver of the vehicle expects to join the vehicle. For example, the second parking position may be near the front door of a home or office building, in a porte cochere, at the end of a walkway, etc.

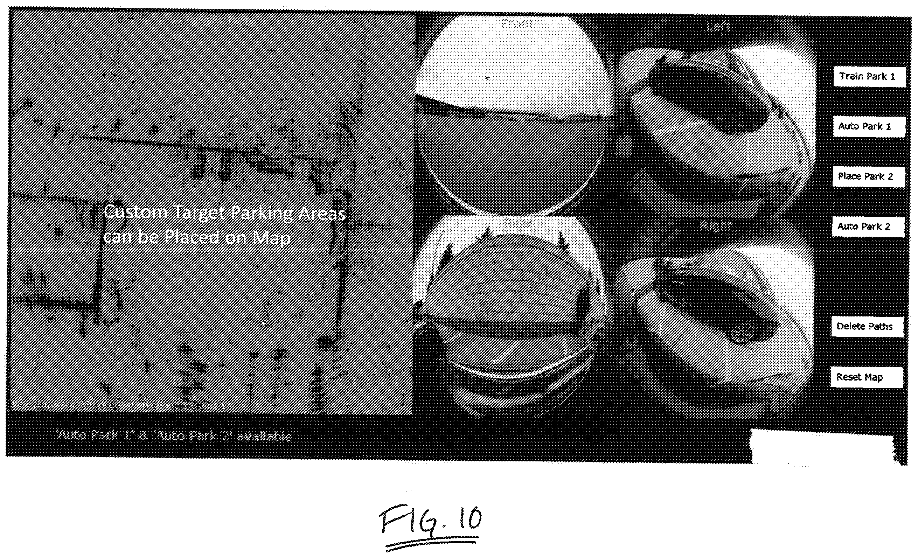

The second parking position may be indicated on the map, as is shown in Figure 10. The second parking position may be learned by driving the car to the location and the operating issuing a second learn signal indicating that the vehicle is located in a second parking position. The method 200 may further include determining a second set of spatial data indicative of the location of the vehicle relative to the map in response to receiving the second learn signal. The method 200 may also include storing the second set of spatial data in the data storage device.

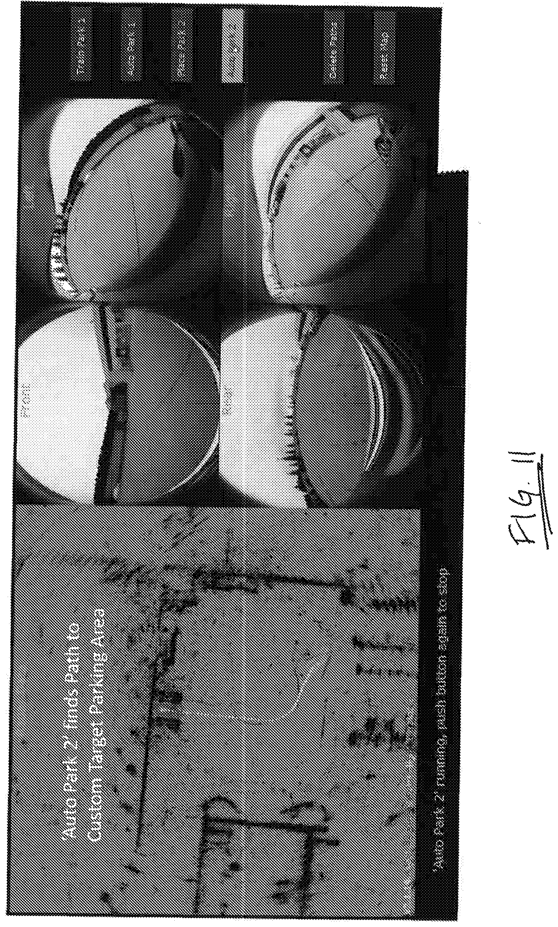

The method may also include receiving a retrieve signal indicating that an operator of the vehicle would like to retrieve the vehicle. In response to receiving the retrieve signal, the method continues with issuing commands to autonomously move the vehicle to the second parking position in response to receiving the retrieve signal, as shown in Figure 11.

The present invention has been described herein in an illustrative manner, and it is to be understood that the terminology which has been used is intended to be in the nature of words of description rather than of limitation. Obviously, many modifications and variations of the invention are possible in light of the above teachings. The invention is defined by the appended claims.

## Claims

1. A method of parking a vehicle (102) comprising:
creating a map (300) of a parking environment (302) utilizing data from at least one sensor (104) coupled to a vehicle (102);
storing the map (300) in a data storage device (108);
receiving a first learn signal indicating that the vehicle (102) is located in a first parking position;
determining a first set of spatial data indicative of the location of the vehicle (102) relative to the map (300) in response to receiving the first learn signal;
storing the first set of spatial data in the data storage device (108);
receiving a park signal indicating that an operator of the vehicle (102) would like the vehicle (102) to autonomously move to the first parking position;
issuing commands to autonomously move the vehicle (102) to the first parking position in response to receiving the park signal;
receiving or determining a second set of spatial data indicative of a pick-up position of the vehicle (102) relative to the map (300), the pick-up position being a location where the driver expects to join the vehicle;
storing the second set of spatial data in the data storage device (108);
receiving a retrieve signal indicating that an operator of the vehicle (102) would like to retrieve the vehicle (102) at the pick-up position;
issuing commands to autonomously move the vehicle (102) to the pick-up position in response to receiving the retrieve signal;
wherein the first learn signal indicates the vehicle is located in a forward-facing direction in the first parking position; and
receiving a driver request for parking the vehicle in a rearward-facing direction in the first parking position.

2. The method as set forth in claim 1 further comprising:
receiving a second learn signal indicating that the vehicle (102) is located in the pick-up position;
wherein receiving or determining the second set of spatial data comprises determining the second set of spatial data in response to receiving the second learn signal.

3. The method as set forth in claim 1 wherein
receiving or determining the second set of spatial data comprises receiving the second set of spatial data.

## Patentansprüche

1. Verfahren zum Einparken eines Fahrzeugs (102), umfassend:
Erstellen einer Karte (300) einer Parkumgebung (302) unter Verwendung von Daten von mindestens einem Sensor (104), der mit einem Fahrzeug (102) gekoppelt ist;
Speichern der Karte (300) in einer Datenspeichervorrichtung (108);
Empfangen eines ersten Lernsignals, das angibt, dass sich das Fahrzeug (102) in einer ersten Parkposition befindet;
Bestimmen eines ersten Satzes von räumlichen Daten, die den Standort des Fahrzeugs (102) relativ zu der Karte (300) angeben, als Reaktion auf das Empfangen des ersten Lernsignals;
Speichern des ersten Satzes von räumlichen Daten in der Datenspeichervorrichtung (108);
Empfangen eines Parksignals, das angibt, dass ein Bediener des Fahrzeugs (102) möchte, dass sich das Fahrzeug (102) autonom zu der ersten Parkposition bewegt;
Ausgeben von Befehlen, um das Fahrzeug (102) autonom zu der ersten Parkposition zu bewegen, als Reaktion auf das Empfangen des Parksignals;
Empfangen oder Bestimmen eines zweiten Satzes von räumlichen Daten, die eine Abholposition des Fahrzeugs (102) relativ zu der Karte (300) angeben, wobei die Abholposition ein Standort ist, an dem der Fahrer erwartet, auf das Fahrzeug zu treffen;
Speichern des zweiten Satzes von räumlichen Daten in der Datenspeichervorrichtung (108);
Empfangen eines Abrufsignals, das angibt, dass ein Bediener des Fahrzeugs (102) das Fahrzeug (102) an der Abholposition abholen möchte;
Ausgeben von Befehlen, um das Fahrzeug (102) autonom zu der Abholposition zu bewegen, als Reaktion auf das Empfangen des Abholsignals;
wobei das erste Lernsignal angibt, dass sich das Fahrzeug in einer vorwärts gerichteten Richtung in der ersten Parkposition befindet; und
Empfangen einer Fahreranforderung zum Einparken des Fahrzeugs in einer rückwärts gerichteten Richtung in der ersten Parkposition.

2. Verfahren nach Anspruch 1, ferner umfassend:
Empfangen eines zweiten Lernsignals, das angibt, dass sich das Fahrzeug (102) in der Abholposition befindet;
wobei das Empfangen oder Bestimmen des zweiten Satzes von räumlichen Daten das Bestimmen des zweiten Satzes von räumlichen Daten als Reaktion auf das Empfangen des zweiten Lernsignals umfasst.

3. Verfahren nach Anspruch 1, wobei
das Empfangen oder Bestimmen des zweiten Satzes von räumlichen Daten das Empfangen des zweiten Satzes von räumlichen Daten umfasst.

## Revendications

1. Procédé de stationnement d'un véhicule (102) comprenant :
la création d'une carte (300) d'un environnement de stationnement (302) à l'aide de données provenant d'au moins un capteur (104) couplé à un véhicule (102) ;
le stockage de la carte (300) dans un dispositif de stockage de données (108) ;
la réception d'un premier signal d'apprentissage indiquant que le véhicule (102) est situé dans une première position de stationnement ;
la détermination d'un premier ensemble de données spatiales indiquant l'emplacement du véhicule (102) par rapport à la carte (300) en réponse à la réception du premier signal d'apprentissage ;
le stockage du premier ensemble de données spatiales dans le dispositif de stockage de données (108) ;
la réception d'un signal de stationnement indiquant qu'un opérateur du véhicule (102) souhaite que le véhicule (102) se déplace de manière autonome vers la première position de stationnement ;
l'émission de commandes pour déplacer de manière autonome le véhicule (102) vers la première position de stationnement en réponse à la réception du signal de stationnement ;
la réception ou la détermination d'un second ensemble de données spatiales indiquant une position de prise en charge du véhicule (102) par rapport à la carte (300), la position de prise en charge étant un emplacement où le conducteur s'attend à rejoindre le véhicule ;
le stockage du second ensemble de données spatiales dans le dispositif de stockage de données (108) ;
la réception d'un signal de récupération indiquant qu'un opérateur du véhicule (102) souhaite récupérer le véhicule (102) à la position de prise en charge ;
l'émission de commandes pour déplacer de manière autonome le véhicule (102) vers la position de prise en charge en réponse à la réception du signal de récupération ;
dans lequel le premier signal d'apprentissage indique que le véhicule est situé dans une direction orientée vers l'avant dans la première position de stationnement ; et
la réception d'une demande du conducteur pour stationner le véhicule dans une direction orientée vers l'arrière dans la première position de stationnement.

2. Procédé selon la revendication 1, comprenant en outre :
la réception d'un second signal d'apprentissage indiquant que le véhicule (102) est situé dans la position de prise en charge ;
dans lequel la réception ou la détermination du second ensemble de données spatiales comprend la détermination du second ensemble de données spatiales en réponse à la réception du second signal d'apprentissage.

3. Procédé selon la revendication 1, dans lequel
la réception ou la détermination du second ensemble de données spatiales comprend la réception du second ensemble de données spatiales.
